# EUROPEAN PATENT APPLICATION

(11) **EP 2 484 886 A1**
(43) Date of publication of application: **08.08.2012**
(21) Application number: 10818718.8
(22) Date of filing: 14.09.2010
(51) Int. Cl.: F02D 41/22, F02D 41/04, F02D 41/16, F02D 45/00

(54) **INTERNAL COMBUSTION ENGINE CONTROL DEVICE**

(30) Priority: 28.09.2009 JP 2009223213
(71) Applicant: Keihin Corporation, Tokyo 163-0539 (JP)
(72) Inventor: ASOU, Ryuji, Shioya-gun Tochigi 329-1233 (JP); SUGAWARA, Hiaki, Shioya-gun Tochigi 329-1233 (JP)
(74) Representative: Hertz, Oliver
(86) International application number: PCT/JP2010/065824
(87) International publication number: WO 2011/037043

(57) **Abstract**

An internal combustion engine control apparatus includes an output-current abnormality-signal holding unit (112) that determines whether a current abnormality signal is being output from a current-abnormality detecting unit (108, 110), which compares a current value detected by a current detecting unit (R1, R2) with a predetermined threshold, and outputs a current abnormality signal when the current value is equal to or less than the predetermined threshold continuously for a predetermined time or longer, and outputs a current abnormality signal when the current abnormality signal is being output continuously for a predetermined time or longer, and does not output a current abnormality signal when the current abnormality signal is output continuously for less than the predetermined time.

## Description

### TECHNICAL FIELD

The present invention relates to a control apparatus of an internal combustion engine, and more particularly relates to an internal combustion engine control apparatus including an idle-speed control valve in a bypass passage that bypasses a throttle valve arranged in an air intake passage.

### BACKGROUND ART

In recent years, an internal combustion engine including an idle-speed control valve in a bypass passage that connects an upstream side and a downstream side of a throttle valve arranged in an air intake passage in communication with each other has been put to practical use. In this internal combustion engine, such a configuration has been proposed that, when a throttle valve is near a fully closed position, at the time of start-up of the internal combustion engine or at the time of idle driving, for example, a control apparatus opens and closes an idle-speed control valve by driving a stepping motor, thereby adjusting the idle speed of the internal combustion engine.

In such a configuration that a stepping motor is used to drive an idle-speed control valve, when a winding of the stepping motor is brought into contact with a motor housing and a circuit is grounded in its middle, an unnecessary large current may flow into a switching circuit of a driving circuit to affect the functions of the switching circuit.

Patent Document 1 discloses a stepping-motor driving circuit that monitors a current flowing in a stepping motor and stops an operation of the stepping motor when a current value becomes equal to or less than a predetermined threshold.

### PRIOR ART DOCUMENT

### PATENT DOCUMENT

Patent Document 1: Japanese Patent Application Laid-open No. S62-123989

### SUMMARY OF THE INVENTION

### PROBLEM TO BE SOLVED BY THE INVENTION

However, according to the studies by the present inventors, in the configuration disclosed in Patent Document 1, there can be a state such that, for example, when an idle-speed control valve is driven to a maximum driving point, which is a position where the idle-speed control valve abuts on a stopper in order to match a mechanical phase and an electric phase in the idle-speed control valve, the idle-speed control valve is slightly bounced back by the stopper, to rotate the stepping motor in an opposite direction, thereby generating an induced electromotive current in the opposite direction.

When such an induced electromotive current is generated, in appearance, a current flowing in the stepping motor decreases. Therefore, in a configuration in which the current flowing in the stepping motor is simply monitored and an operation of the stepping motor is stopped when the current value becomes equal to or less than a predetermined threshold, the operation of the stepping motor is stopped unnecessarily, although there is no problem in the stepping motor itself. Therefore, there is room for improvement on this configuration.

The present invention has been achieved in view of the above considerations, and an object of the present invention is to provide an internal combustion engine control apparatus that can detect an abnormality of a current flowing in a stepping motor more accurately, and can prevent a situation that an operation of the stepping motor is stopped unnecessarily.

### MEANS FOR SOLVING THE PROBLEM

To achieve the above object, a first aspect of the present invention is to provide an internal combustion engine control apparatus including a throttle valve arranged in an air intake passage of an internal combustion engine, a bypass passage that is communicated with the air intake passage and bypasses the throttle valve, an idle-speed control valve that controls an idle speed of the internal combustion engine by adjusting a flow rate of air flowing in the bypass passage, a stepping motor that drives the idle-speed control valve, and a microcomputer that controls an entire operation of the internal combustion engine, wherein the device further includes a driving unit that step-drives the stepping motor in response to a control signal input from the microcomputer, a current detecting unit that detects a current flowing in the stepping motor via the driving unit, a current-abnormality detecting unit that compares a current value detected by the current detecting unit with a predetermined threshold, and outputs a current abnormality signal when the current value is equal to or less than the predetermined threshold, and an output-current abnormality-signal holding unit that determines whether the current abnormality signal is being output from the current-abnormality detecting unit continuously for a predetermined time or longer, and outputs a current abnormality signal when the current abnormality signal is being output continuously for a predetermined time or longer, and does not output a current abnormality signal when the current abnormality signal is output continuously for less than the predetermined time, and the microcomputer stops an output of a control signal to the driving unit in response to an input of the current abnormality signal from the current abnormality-signal holding unit.

According to a second aspect of the present invention, in addition to the first aspect, the predetermined time corresponds to a time during which the control signal input from the microcomputer to the driving unit is at a high level.

According to a third aspect of the present invention, in addition to the first and second aspects, a time point of starting a measurement of the predetermined time and a time point of inputting the control signal from the microcomputer to the driving unit are substantially a same time point.

According to a fourth aspect of the present invention, in addition to the first to third aspects, the internal combustion engine control apparatus further includes a denoising unit that removes noise superimposed on an output signal of the current detecting unit, between the current detecting unit and the current-abnormality detecting unit.

According to a fifth aspect of the present invention, in addition to the first to fourth aspects, at least the current detecting unit, the current-abnormality detecting unit, and the current abnormality-signal holding unit are arranged in a same integrated circuit, and the integrated circuit and the microcomputer are arranged in a same package.

### EFFECT OF THE INVENTION

According to the first aspect of the present invention, it is possible to provide an internal combustion engine control apparatus that includes the output-current abnormality-signal holding unit that determines whether a current abnormality signal is being output continuously for a predetermined time or longer from the current-abnormality detecting unit that compares a current value detected by the current detecting unit with the predetermined threshold and outputs the current abnormality signal when the current value is equal to or less than the predetermined threshold, and outputs a current abnormality signal when the current abnormality signal is being output continuously for a predetermined time or longer, and does not output a current abnormality signal when the current abnormality signal is output continuously for less than the predetermined time, and the microcomputer stops an output of the control signal to the driving unit in response to an input of the current abnormality signal from the current abnormality-signal holding unit, thereby enabling to detect an abnormality of the current flowing in the stepping motor more accurately, and to prevent a situation that an operation of the stepping motor is stopped unnecessarily.

According to the second aspect of the present invention, the predetermined time corresponds to a time during which the control signal input from the microcomputer to the driving unit is at a high level, and therefore an operation of the stepping motor can be stopped by determining the current to be abnormal, only when a decreasing state in which the current flowing in the stepping motor becomes equal to or less than the predetermined value is indicated for more than a unit excitation time during which the stepping motor is energized and driven in each excitation phase. The operation of the stepping motor can be reliably stopped only when it is required, for example, when the current flowing in the stepping motor is abnormal.

According to the third aspect of the present invention, the time point of starting a measurement of the predetermined time and the time point of inputting the control signal from the microcomputer to the driving unit are set to be substantially a same time point, and therefore the time indicating the decreasing state in which the current flowing in the stepping motor becomes equal to or less than the predetermined value can be accurately measured, thereby preventing a situation that an operation of the stepping motor is stopped unnecessarily.

According to the fourth aspect of the present invention, the denoising unit that removes noise superimposed on an output signal of the current detecting unit is provided between the current detecting unit and the current-abnormality detecting unit, and therefore the current flowing in the stepping motor can be detected more accurately, thereby preventing a situation that an operation of the stepping motor is stopped unnecessarily.

According to the fifth aspect of the present invention, while at least the current detecting unit, the current-abnormality detecting unit, and the current abnormality-signal holding unit, which are suitable for forming a so-called customized IC package, are arranged in a same integrated circuit to form the customized IC package, and the microcomputer, which is desired to be generalized over all vehicle types such as an ECU, is generalized as much as possible, and these are arranged in a same package, thereby enabling to provide an internal combustion engine control apparatus that has a compact configuration and is provided with necessary functions, while maintaining the generality.

### BRIEF DESCRIPTION OF THE DRAWINGS

[FIG. 1] FIG. 1 is a schematic sectional view showing an overall configuration of an internal combustion engine according to an embodiment of the present invention.
[FIG. 2] FIG. 2 is a partial sectional view showing a configuration of an idle-speed control valve and a stepping motor according to the embodiment.
[FIG. 3] FIG. 3 is a circuit diagram showing a configuration of a driving circuit of the idle-speed control valve according to the embodiment.
[FIG. 4] FIG. 4 is a circuit diagram showing a modification of comparators shown in FIG. 3.
[FIG. 5] FIG. 5 is a sectional view showing a configuration in which a microcomputer and an integrated circuit are arranged and stacked in a same package.
[FIG. 6] FIG. 6 is a flowchart for showing a flow of a current-abnormality detecting process according to the embodiment.
[FIG. 7] FIG. 7 is a time chart of the current-abnormality detecting process according to the embodiment, and shows a process in a normal state.
[FIG. 8] FIG. 8 is a time chart of the current-abnormality detecting process according to the embodiment, and shows a process in an abnormal state.

### EMBODIMENT FOR CARRYING OUT THE INVENTION

An internal combustion engine as an embodiment of the present invention will be explained below with reference to the accompanying drawings.

### [Overall configuration]

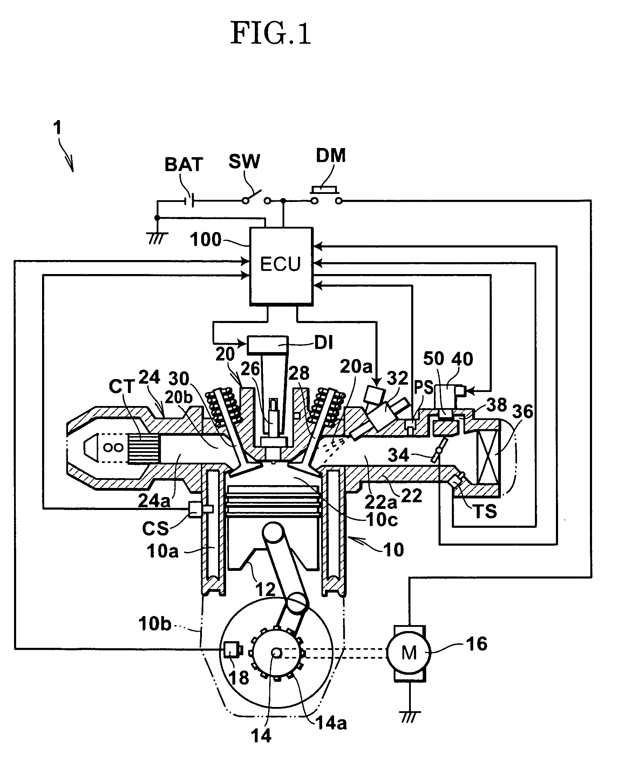

An overall configuration of an internal combustion engine according to an embodiment of the present invention is explained in detail with reference to FIG. 1.

FIG. 1 is a schematic sectional view showing an overall configuration of the internal combustion engine according to the present embodiment.

As shown in FIG. 1, an internal combustion engine 1 according to the present embodiment includes a cylinder block 10 having a cooling-water flow path 10a, and a coolant temperature sensor CS that detects the temperature of cooling water flowing in the cooling-water flow path 10a is provided in the cooling-water flow path 10a. A piston 12 is arranged inside the cylinder block 10, and the piston 12 is connected to a crank shaft 14 arranged inside a crank case 10b assembled to a lower part of the cylinder block 10, and is rotated by a starter motor 16, which is supplied with power from a power source BAT via an ignition switch SW and a driving circuit DM at the time of start-up of the internal combustion engine 1. A timing rotor 14a is provided on the crank shaft 14, and a crank angle sensor 18 that detects a rotation angle of the crank shaft 14 is provided near the timing rotor 14a.

A cylinder head 20 is assembled to an upper part of the cylinder block 10. A combustion chamber 10c is defined by an inner wall of the cylinder block 10, an upper surface of the piston 12, and an inner wall of the cylinder head 18. An air intake passage 20a and an exhaust passage 20b, respectively communicated with the combustion chamber 10c are formed in the cylinder head 20, and an air intake pipe 22 having an air intake passage 22a communicated with the air intake passage 20a, and an exhaust pipe 24 having an exhaust passage 24a communicated with the exhaust passage 20b are respectively assembled to the cylinder head 20.

An ignition plug 26 that ignites air-fuel mixture in the combustion chamber 10c, an air intake valve 28 that can free open and close the air intake passages 20a and 22a, and an exhaust valve 30 that can free open and close the exhaust passages 20b and 24a are provided in the cylinder block 10.

The air intake pipe 22 is provided with an injector 32 that injects fuel into the air intake passages 20a and 22a via a driving circuit DI is provided near the air intake valve 28, and a throttle valve 34 is provided on an upstream side of the injector 32. Further, an air cleaner 36 communicated with open air is provided on an upstream side of the throttle valve 34, and a manifold pressure sensor PS that detects manifold pressure is provided between the injector 32 and the throttle valve 34. An intake temperature sensor TS that detects temperature of intake air is also provided between the throttle valve 34 and the air cleaner 36.

A bypass passage 38 that bypasses the throttle valve 34 and connects an upstream side and a downstream side of the throttle valve 34 in communication with each other is provided in the air intake pipe 22. An idle-speed control valve 50 that is driven by a stepping motor 40 so as to be able to freely open and close the bypass passage 38 is also provided.

Meanwhile, a catalyst converter CT is provided in the exhaust passage 24a of the exhaust pipe 24.

Further, the internal combustion engine 1 includes an ECU (Electronic Control Unit) 100, and the ECU 100 is supplied with power from the power source BAT to control an entire operation of the internal combustion engine 1 via the stepping motor 40 and the driving circuits DI and DM, by using detection output values of various sensors such as the crank angle sensor 18, the coolant temperature sensor CS, the manifold pressure sensor PS, and the intake temperature sensor TS.

### [Configurations of stepping motor and idle-speed control valve]

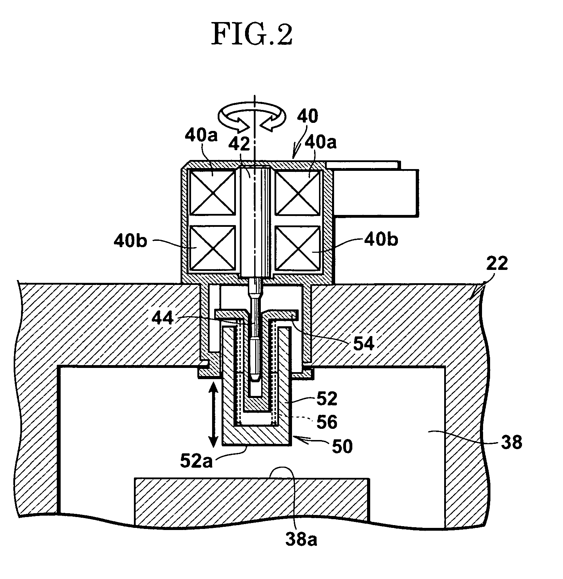

Configurations of the stepping motor 40 and the idle-speed control valve 50 are explained in detail with reference to FIG. 2.

FIG. 2 is a partial sectional view showing a configuration of the idle-speed control valve and the stepping motor according to the present embodiment.

As shown in FIG. 2, the stepping motor 40 includes stators 40a and 40b, a rotor 42 rotated with energization to the stators 40a and 40b, and a rod member 44 that moves the idle-speed control valve 50 corresponding to the rotation of the rotor 42.

The idle-speed control valve 50 includes a closure member 52 that can freely open and close the bypass passage 38 of the air intake pipe 22, a driven member 54 fixed to the rod member 44 of the stepping motor 40, and a spring member 56 that elastically connects the closure member 52 with the driven member 54.

In the above configuration, as the rod member 44 of the stepping motor 40 moves downward in the figure, the closure member 52 of the idle-speed control valve 50 also moves downward in the figure, and is freely moved across the bypass passage 38 until a lower face 52a thereof abuts on a stopper face 38a provided on an inner surface of the bypass passage 38 in the air intake pipe 22. Furthermore, in a state with the lower face 52a of the closure member 52 of the idle-speed control valve 50 abutting on the stopper face 38a provided on the inner surface of the bypass passage 38 in the air intake pipe 22, matching between the position of the closure member 52 of the idle-speed control valve 50, that is, a mechanical position in the rod member 44 of the stepping motor 40 and an electric signal corresponding thereto is achieved.

### [Configuration of current abnormality detection circuit]

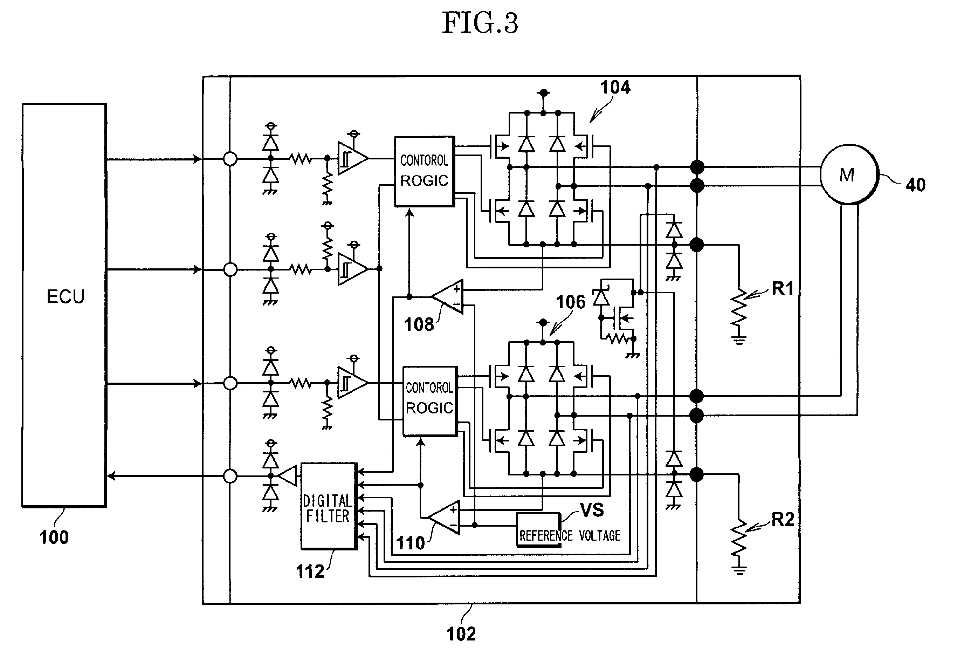

A configuration of the stepping-motor driving circuit that drives the stepping motor 40 is explained below in detail with reference to FIG. 3.

FIG. 3 is a circuit diagram showing a configuration of a driving circuit of the idle-speed control valve according to the present embodiment.

As shown in FIG. 3, a stepping-motor driving circuit 102 includes switching element groups 104 and 106 on/off controlled in response to a control signal from the ECU 100 serving as a microcomputer. The switching element group 104 two-phase excites the stator 40a of the stepping motor 40, whereas the switching element group 106 two-phase excites the stator 40b of the stepping motor 40, while varying the phase with respect to excitation by the switching element group 104. Further, the stepping-motor driving circuit 102 includes a resistance element R1 connected to the switching element group 104, a resistance element R2 connected to the switching element group 106, a comparator 108 connected to the switching element group 104 and the resistance element R1, a comparator 110 connected to the switching element group 106 and the resistance element R2, and a digital filter 112 connected to the switching element groups 104 and 106 and the comparators 108 and 110.

More specifically, a non-inverting input terminal of the comparator 108 is connected to a high potential side of the resistance element R1, and an inverting input terminal is connected to a reference voltage source. Further, a non-inverting input terminal of the comparator 110 is connected to a high potential side of the resistance element R2, and an inverting input terminal is connected to the reference voltage source. These comparators 108 and 110 output a current abnormality signal when a voltage value applied to the corresponding resistance element R1 or R2 is equal to or less than a predetermined value, that is, when a current value flowing in each excitation phase of the stators 40a and 40b of the stepping motor 40 is equal to or less than the predetermined value.

Every time a high-level control signal is input from the ECU 100 to the switching element groups 104 and 106 of the stepping-motor driving circuit 102 and energization to the stepping motor 40 is started, that is, every time the stators 40a and 40b of the stepping motor 40 are energized according to the high-level control signal and excitation is sequentially started in the corresponding excitation phase, the digital filter 112 starts a time measuring operation. Further, when the current abnormality signals from the compactors 108 and 110 are input continuously for a predetermined time that is longer than a unit time during which the stepping motor 40 is energized in order to sequentially excite the stators 40a and 40b of the stepping motor 40 in the corresponding excitation phase, that is, for a predetermined time that is longer than a time (a step driving time) during which the control signal input from the ECU 100 to the switching element groups 104 and 106 of the stepping-motor driving circuit 102 is at a high level corresponding to each excitation phase, the digital filter 112 outputs a final current abnormality signal to the ECU 100.

That is, the stepping-motor driving circuit 102 functions as a driving unit that step-drives the stepping motor 40, and the resistance elements R1 and R2 respectively function as a current detecting unit that detects a current flowing in the stepping motor 40. The comparators 108 and 110 respectively function as a current-abnormality detecting unit that detects an abnormality of the current flowing in the stepping motor 40. The digital filter 112 functions as a current abnormality-signal holding unit that does not output and holds a final current abnormality signal when the current abnormality signals from the comparators 108 and 110 flow for a time shorter than the step driving time, which is each excitation time of the stepping motor 40, and outputs the final current abnormality signal only when the current abnormality signals from the comparators 108 and 110 flow continuously for a predetermined time longer than the step driving time of the stepping motor 40.

In the above configuration, the ECU 100 transmits a control signal for stopping an operation of the stepping motor 40 to the stepping-motor driving circuit 102, corresponding to an input of the current abnormality signal from the digital filter 112, and the stepping-motor driving circuit 102 having received the control signal stops energization to the stators 40a and 40b of the stepping motor 40, thereby stopping an operation of the stepping motor 40.

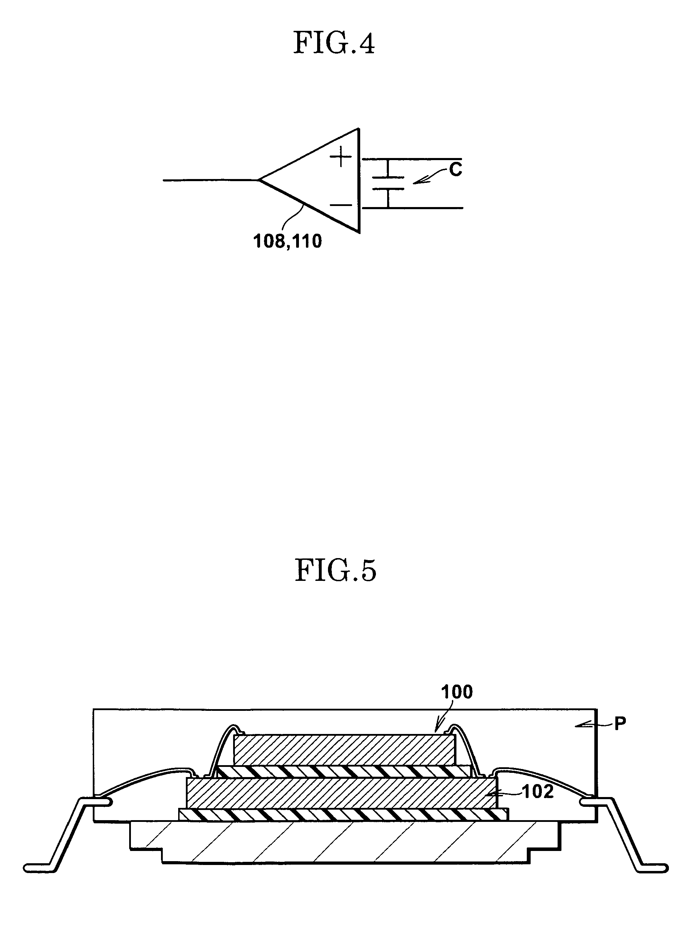

To remove a noise signal, which may be superimposed on a voltage signal to be input to the comparators 108 and 110, as exemplified in a modification shown in FIG. 4, a capacitor element C for noise removing can be interposed and connected between the inverting input terminal and the non-inverting input terminal in the comparators 108 and 110.

As shown in FIG. 5, the stepping-motor driving circuit 102 can be formed as an integrated circuit separate from the ECU 100, while being stacked on each other and accommodated in a same package P. Particularly, in the stepping-motor driving circuit 102 that functions as the driving unit that step-drives the stepping motor 40, the resistance elements R1 and R2 that respectively function as the current detecting unit that detects the current flowing in the stepping motor 40, the comparators 108 and 110 that respectively function as the current-abnormality detecting unit that detects an abnormality of the current flowing in the stepping motor 40, and the digital filter 112 that functions as the current abnormality-signal holding unit that does not output and holds the final current abnormality signal when the current abnormality signal flows for the time shorter than the step driving time, which is each excitation time of the stepping motor 40, and outputs the final current abnormality signal only when the current abnormality signal flows continuously for the predetermined time longer than the step driving time of the stepping motor 40, respectively, have a high particularity according to the vehicle type and specifications. Accordingly, these are preferably formed in a customized IC package. On the other hand, it is preferable that the configuration of the ECU 100 as the microcomputer is generalized as much as possible to provide cost advantages. Therefore, when at least these functional parts in the stepping-motor driving circuit 102 are configured as a customized IC package, and appropriately stacked on the generalized ECU 100 to be incorporated in the same package P, cost reduction and a compact configuration can be achieved, while maintaining necessary functions.

### [Current-abnormality detecting process]

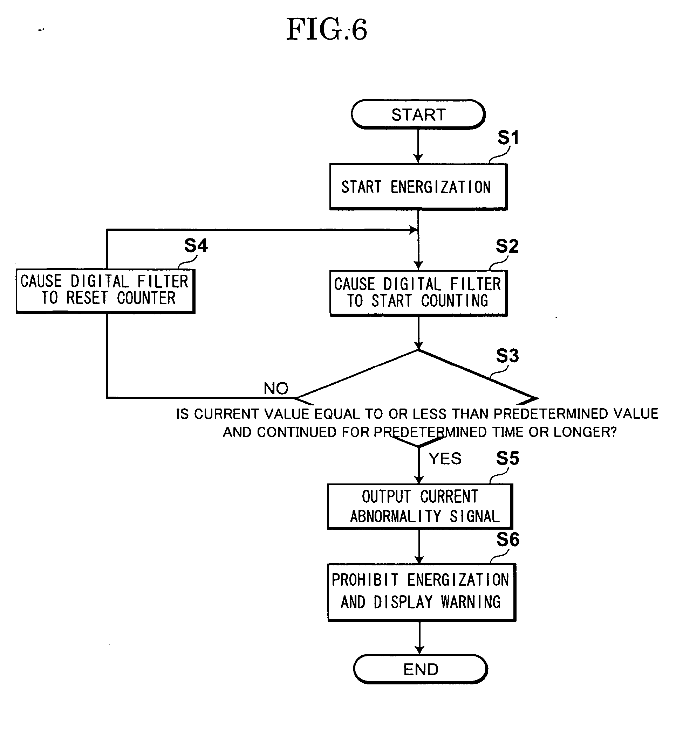

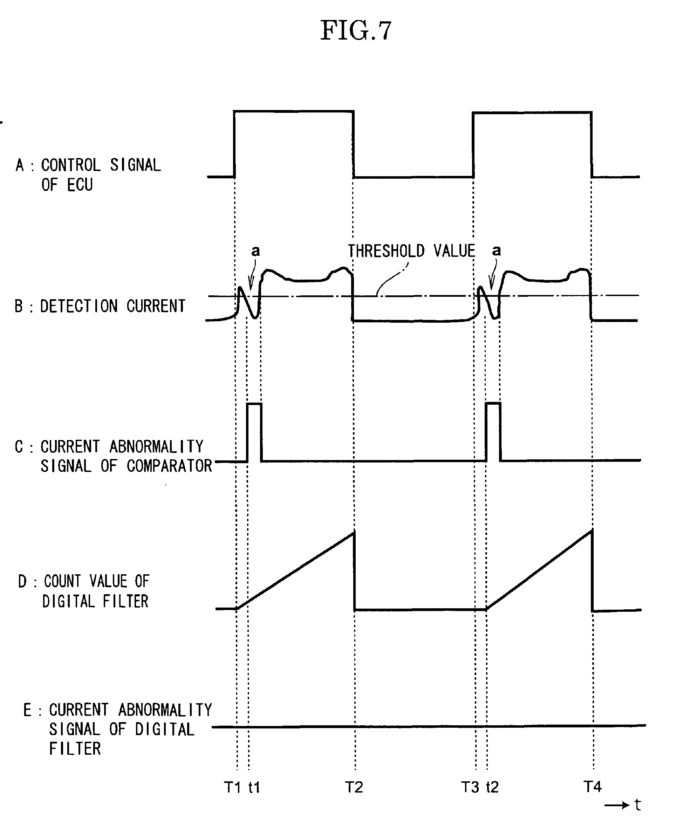

A flow in the current-abnormality detecting process using the stepping-motor driving circuit 102 is explained below in detail with reference to FIG. 6 and FIG. 7. The current-abnormality detecting process is performed by the ECU 100 and the stepping-motor driving circuit 102 in cooperation with each other.

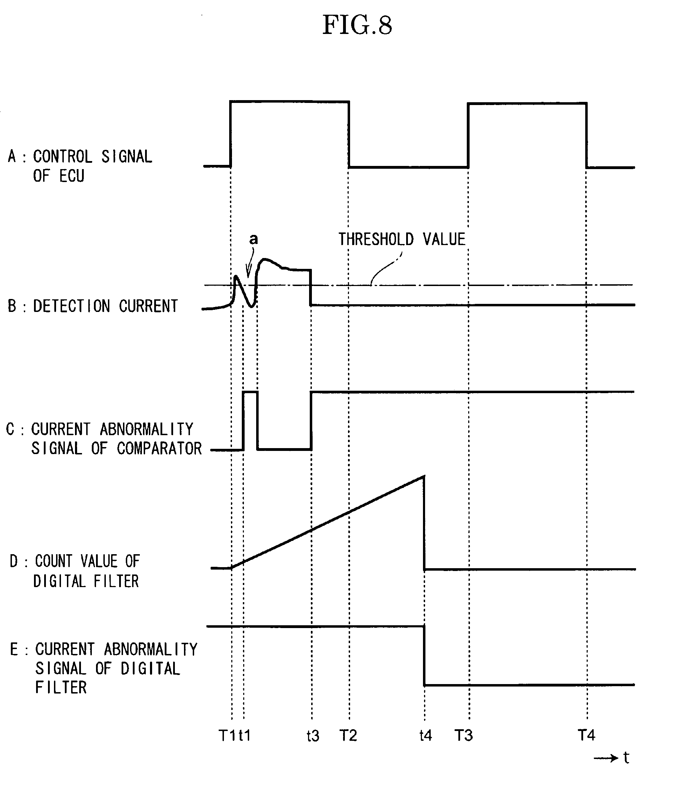

FIG. 6 is a flowchart for showing a flow of the current-abnormality detecting process according to the present embodiment. FIG. 7 is a time chart of the current-abnormality detecting process according to the present embodiment, and shows a process in a normal state. FIG. 8 is a time chart of the current-abnormality detecting process according to the present embodiment, and shows a process in an abnormal state, which is different from FIG. 7 in that the current flowing in the stators 40a and 40b of the stepping motor 40, that is, a detection current that has detected the current flowing in the switching element groups 104 and 106 of the stepping-motor driving circuit 102 via the resistance elements R1 and R2 becomes 0 in the middle of the operation of the stepping motor 40. In FIGS. 7 and 8, the horizontal axis represents a time t, and the vertical axis represents a voltage value with respect to respective signals, a current value with respect to the current, and a count value with respect thereto, respectively.

As shown in FIG. 6, in the current-abnormality detecting process of the present embodiment, when the ignition switch SW is turned on, the internal combustion engine is started up, corresponding to the timing for matching between the mechanical phase and the electric phase in the stepping motor 40, and the current-abnormality detecting process proceeds to Step S 1.

At Step S1, a predetermined control signal for turning on/off the switching element groups 104 and 106 (a control signal shown in A in FIGS. 7 and 8) is input from the ECU 100 to the stepping-motor driving circuit 102, to energize the stepping motor 40, and the stators 40a and 40b of the stepping motor 40 are sequentially excited in a corresponding excitation phase. Accordingly, the stepping motor 40 starts step driving, and the rod member 44 of the stepping motor 40 starts to move. Therefore, the closure member 52 of the idle-speed control valve 50 starts to move across the bypass passage 38. The closure member 52 of the idle-speed control valve 50 continues its movement until the lower face 52a thereof abuts on the stopper face 38a provided on the inner surface of the bypass passage 38 in the air intake pipe 22. Accordingly, the process at Step S1 is complete, and the current-abnormality detecting process proceeds to Step S2 that follows Step S1.

At Step S2, the digital filter 112 starts a counter for measuring an elapsed time, using the time when energization to the stepping motor 40 is started, that is, a control signal for starting energization to the stepping motor 40 transmitted from the ECU 100 to the stepping-motor driving circuit 102 is switched to be a high level as a starting point. Accordingly, the process at Step S2 is complete, and the current-abnormality detecting process proceeds to Step S3 that follows Step S2.

More specifically, at Step S2, as shown in A in FIGS. 7 and 8, the control signal from the ECU 100 to the stepping-motor driving circuit 102 is switched to be a high level at a time T1 and a time T3. Therefore, the time at which the counter of the digital filter 112 can start counting is the time T1 and the like. However, for convenience' sake of explanations, in D in FIGS. 7 and 8, it is assumed that counting is started from the time T1. At this time, because the closure member 52 of the idle-speed control valve 50 continues to move, the lower face 52a thereof starts to abut on the stopper face 38a provided on the inner surface of the bypass passage 38 in the air intake pipe 22. Therefore, the value of the current flowing in the stators 40a and 40b of the stepping motor 40 decreases, and the lower face 52a reaches a position at which the current abnormality signal can be input from the comparators 108 and 110 of the stepping-motor driving circuit 102 to the digital filter 112.

When the lower face 52a of the closure member 52 of the idle-speed control valve 50 abuts on the stopper face 38a provided on the inner surface of the bypass passage 38 in the air intake pipe 22, as shown by an arrow a in B in FIGS. 7 and 8, the value of the current flowing in the stators 40a and 40b of the stepping motor 40 decreases to a predetermined threshold or less. Therefore, as shown at a time t1 and a time t2 in C in FIG. 7 and at a time t1 in C in FIG. 8, a high-level current abnormality signal is input from the comparators 108 and 110 of the stepping-motor driving circuit 102 to the digital filter 112. The current abnormality signal from the comparator in C in FIGS. 7 and 8 represents a signal at the time of an operation of the stepping motor 40.

Furthermore, at a time t3 shown in B in FIG. 8, when an inoperative state or the like occurs in the switching element groups 104 and 106 of the stepping-motor driving circuit 102, the value of the current flowing in the stators 40a and 40b of the stepping motor 40 also decreases to the predetermined threshold or less. Therefore, as shown at the time t3 in addition to the time t1 in C in FIG. 8, the high-level current abnormality signal is input from the comparators 108 and 110 of the stepping-motor driving circuit 102 to the digital filter 112.

At Step S3, the digital filter 112 determines whether a state with the current abnormality signal being equal to or less than the predetermined value continues for a predetermined time or longer, by referring to the current abnormality signal input from the comparators 108 and 110 and the count value of the counter of the digital filter 112. The predetermined time is a time during which the control signal output from the ECU 100 for energizing the stepping motor 40 and input to the stepping-motor driving circuit 102 is at a high level, that is, a preset time longer than the time from the time T1 to a time T2 and the time from the time T3 to a time T4 shown in A in FIGS. 7 and 8, and the elapsed time is shown by a time t4 in D in FIG. 8. For example, as the time during which the control signal is at a high level is assumed to be 5 ms, the predetermined time can be set to 8 ms. As a result of determination, when the state with the current value of the current abnormality signal from the comparators 108 and 110 being equal to or less than the predetermined value does not continue for the predetermined time or longer, the current-abnormality detecting process proceeds to Step S4. On the other hand, when the state with the current value of the current abnormality signal from the comparators 108 and 110 being equal to or less than the predetermined value continues for the predetermined time or longer, the current-abnormality detecting process proceeds to Step S5.

More specifically, at Step S3, at the time of determining whether the state with the current abnormality signal being equal to or less than the predetermined value continues for the predetermined time or longer, at the time T2 at which the control signal input from the ECU 100 to the stepping-motor driving circuit 102 is switched from a high level to a low level, as shown in B in FIG. 7, when the detected current value of the current flowing in the stators 40a and 40b of the stepping motor 40 exceeds a predetermined threshold, and as shown in C FIG. 7, when the current abnormality signal input from the comparators 108 and 110 is at a low level, it is obvious that the state with the current abnormality signal being equal to or less than the predetermined value does not continue for the predetermined time or longer. Accordingly, it is determined that it is the normal state in which the state with the current abnormality signal being equal to or less than the predetermined value does not continue for the predetermined time or longer. On the other hand, at the time T2, as shown in B in FIG. 8, when the current value of the current flowing in the stators 40a and 40b of the stepping motor 40 is less than the predetermined threshold, and as shown in C in FIG. 8, when the current abnormality signal input from the comparators 108 and 110 is at a high level, it is determined whether the state continues for the predetermined time. When the state continues for the predetermined time, it is determined that it is an abnormal state in which the state with the current abnormality signal being equal to or less than the predetermined value continues for the predetermined time or longer. In this case, when the state does not continue for the predetermined time, the current-abnormality detecting process proceeds to Step S4.

At Step S4, where the state with the current abnormality signal being equal to or less than the predetermined value does not continue for the predetermined time or longer, at the time T2 and the like shown in D in FIG. 7, the digital filter 112 resets the count value of the counter to 0. At this time, as shown in E in FIG. 7, the current abnormality signal from the digital filter 112 is input to the ECU 100, with a high level being maintained. Accordingly, the process at Step S4 is complete, and the current-abnormality detecting process returns to the initial process at Step S 1.

On the other hand, at Step S5, where the state with the current abnormality signal being equal to or less than the predetermined value continues for the predetermined time or longer, at the time t4 shown in D in FIG. 8, the digital filter resets the count value of the counter to 0. At this time, as shown in E in FIG. 8, the digital filter 112 outputs the current abnormality signal to the ECU 100, with the level being changed to a low level. Accordingly, the process at Step S5 is complete, and the current-abnormality detecting process proceeds to Step S6 that follows Step S3.

At Step S6, the ECU 100 determines that an inoperative state or the like occurs in the switching element groups 104 and 106 of the stepping-motor driving circuit 102 at the time t3 and the like shown in FIG. 8, stops an input of the control signal to the stepping-motor driving circuit 102 in the subsequent process to prohibit an energization operation to the stepping motor 40, and issues a warning indicating that a current abnormality has occurred in the stepping motor 40 by lighting a warning lamp (not shown) or the like. Accordingly, the process at Step S6 is complete, and this series of current-abnormality detecting process ends.

According to the above configuration, it is possible to provide an internal combustion engine control apparatus including the output-current abnormality-signal holding unit that determines whether a current abnormality signal is being output continuously for a predetermined time or longer from the current-abnormality detecting unit that compares a current value detected by the current detecting unit with the predetermined threshold and outputs the current abnormality signal when the current value is equal to or less than the predetermined value, and outputs a current abnormality signal when the current abnormality signal is being output continuously for a predetermined time or longer, and does not output a current abnormality signal when the current abnormality signal is output continuously for less than the predetermined time, where the microcomputer stops an output of a control signal to the driving unit in response to an input of the current abnormality signal from the current abnormality-signal holding unit, thereby enabling to detect an abnormality of the current flowing in the stepping motor more accurately, and to prevent a situation that an operation of the stepping motor is stopped unnecessarily.

The predetermined time corresponds to a time during which the control signal input from the microcomputer to the driving unit is at a high level. Therefore, an operation of the stepping motor can be stopped by determining the current to be abnormal, only when the decreasing state in which the current flowing in the stepping motor becomes equal to or less than the predetermined value is shown for more than a unit excitation time during which the stepping motor is energized and driven in each excitation phase. The operation of the stepping motor can be reliably stopped only when it is required, for example, when the current flowing in the stepping motor is abnormal.

The time point of starting a measurement of the predetermined time and the time point of inputting the control signal from the microcomputer to the driving unit are set to be substantially the same time point. Therefore, the time indicating the decreasing state in which the current flowing in the stepping motor becomes equal to or less than the predetermined value can be accurately measured, thereby preventing a situation that an operation of the stepping motor is stopped unnecessarily.

The denoising unit that removes noise superimposed on an output signal of the current detecting unit is provided between the current detecting unit and the current-abnormality detecting unit. Accordingly, the current flowing in the stepping motor can be detected more accurately, thereby preventing a situation that an operation of the stepping motor is stopped unnecessarily.

While at least the current detecting unit, the current-abnormality detecting unit, and the current abnormality-signal holding unit, which are suitable for forming a so-called customized IC package, are arranged in the same integrated circuit to form the customized IC package, and the microcomputer, which is desired to be generalized over all vehicle types such as the ECU, is generalized as much as possible, and these are arranged in the same package, thereby enabling to provide an internal combustion engine control apparatus that has a compact configuration and is provided with necessary functions, while maintaining the generality.

In the present invention, the types, arrangements, and numbers of elements are not limited to those described in the above embodiment, and it is needless to mention that changes can be appropriately made without departing from the scope of the invention, such as replacing these constituent elements with other elements having equivalent operational effects.

### INDUSTRIAL APPLICABILITY

As explained above, in the present invention, it is possible to provide an internal combustion engine control apparatus that can detect an abnormality of a current flowing in a stepping motor more accurately, and can prevent a situation that an operation of the stepping motor is stopped unnecessarily, and the internal combustion engine control apparatus is expected to be widely applicable to internal combustion engines of a vehicle or the like because of its general-purpose and universal characteristics.

## Claims

1. An internal combustion engine control apparatus comprising: a throttle valve arranged in an air intake passage of an internal combustion engine; a bypass passage that is communicated with the air intake passage and bypasses the throttle valve; an idle-speed control valve that controls an idle speed of the internal combustion engine by adjusting a flow rate of air flowing in the bypass passage; a stepping motor that drives the idle-speed control valve; and a microcomputer that controls an entire operation of the internal combustion engine, wherein
the device further comprises:
a driving unit that step-drives the stepping motor in response to a control signal input from the microcomputer;
a current detecting unit that detects a current flowing in the stepping motor via the driving unit;
a current-abnormality detecting unit that compares a current value detected by the current detecting unit with a predetermined threshold, and outputs a current abnormality signal when the current value is equal to or less than the predetermined threshold; and
an output-current abnormality-signal holding unit that determines whether the current abnormality signal is being output from the current-abnormality detecting unit continuously for a predetermined time or longer, and outputs a current abnormality signal when the current abnormality signal is being output continuously for a predetermined time or longer, and does not output a current abnormality signal when the current abnormality signal is output continuously for less than the predetermined time, and
the microcomputer stops an output of a control signal to the driving unit in response to an input of the current abnormality signal from the current abnormality-signal holding unit.

2. The internal combustion engine control apparatus according to claim 1, wherein the predetermined time corresponds to a time during which the control signal input from the microcomputer to the driving unit is at a high level.

3. The internal combustion engine control apparatus according to claim 1, wherein a time point of starting a measurement of the predetermined time and a time point of inputting the control signal from the microcomputer to the driving unit are substantially a same time point.

4. The internal combustion engine control apparatus according to claim 1, further comprising a denoising unit that removes noise superimposed on an output signal of the current detecting unit, between the current detecting unit and the current-abnormality detecting unit.

5. The internal combustion engine control apparatus according to claim 1, wherein at least the current detecting unit, the current-abnormality detecting unit, and the current abnormality-signal holding unit are arranged in a same integrated circuit, and the integrated circuit and the microcomputer are arranged in a same package.
